(19) Europäisches Patentamt
European Patent Office
Office européen des brevets

(11) **EP 1 869 406 B1**

(12) **EUROPEAN PATENT SPECIFICATION**

(45) Date of publication and mention
of the grant of the patent:
**23.04.2014 Bulletin 2014/17**

(51) Int Cl.:
**G01C 21/16** *(2006.01)*    **B60R 21/0132** *(2006.01)*

(21) Application number: **06717117.3**

(22) Date of filing: **16.03.2006**

(86) International application number:
**PCT/SE2006/050033**

(87) International publication number:
**WO 2006/110099 (19.10.2006 Gazette 2006/42)**

(54) **CONTROL SYSTEM FOR VEHICLES**

STEUERSYSTEM FÜR FAHRZEUGE

SYSTEME DE COMMANDE DE VEHICULES

(84) Designated Contracting States:
**AT BE BG CH CY CZ DE DK EE ES FI FR GB GR HU IE IS IT LI LT LU LV MC NL PL PT RO SE SI SK TR**

(30) Priority: **11.04.2005 SE 0500807**

(43) Date of publication of application:
**26.12.2007 Bulletin 2007/52**

(73) Proprietor: **Advanced Inertial Measurement Systems Sweden Aktiebolag**
**691 80 Karlskoga (SE)**

(72) Inventor: **BIRGERSSON, Anders**
**S-691 42 Karlskoga (SE)**

(74) Representative: **Andréasson, Ivar**
**Hynell Patenttjänst AB**
**Patron Carls väg 2**
**683 40 Hagfors/Uddeholm (SE)**

(56) References cited:
| | |
|---|---|
| EP-A1- 0 709 257 | WO-A1-2004/001337 |
| US-A1- 2003 070 483 | US-A1- 2003 155 753 |
| US-A1- 2004 244 510 | US-A1- 2005 060 069 |
| US-B2- 6 480 152 | US-B2- 6 516 283 |

**Description**

TECHNICAL FIELD

This invention relates to a control system for a vehicle comprising a central control unit and a sensor arrangement arranged within the vehicle to allow varying temperature of the sensor arrangement, said sensor arrangement comprising an inertia measurement unit equipped with MEMS accelerometer and MEMS gyro meter producing signals, wherein said inertia measurement unit is arranged to provide said central control unit with digitalised information related to the behaviour of said vehicle by means of a digital signal processor to enable activation and/or deactivation of at least one electronic system of said vehicle.

PRIOR ART

It is well known that Inertia Measurement Units (IMU) may be used to achieve more accurate control of different systems. For instance within aviation the use of advanced IMU's are known, i.e. including a combination of gyro meters used for efficient and accurate navigation. However, such units, and especially the gyro meters, do require high precision mechanical parts and other expensive parts.

For some time, development within the electronic field has enabled production of sensors, e.g. gyro meters, made from micro electronic mechanical systems (MEMS). In contrast to a gyro meter made of mechanical parts a gyro meter made from MEMS is very cheap, since the cost is merely a fraction of a mechanical gyro meter. This generally holds true also for other MEMS sensors, e.g. accelerometers. As a consequence the potential to include further sensors in different systems, e.g. including gyro meters, has increased drastically, due to the reasonable cost. Furthermore MEMS sensors have very small space requirements.

Systems are known that use MEMS sensors, to improve vehicle navigation (INS), e.g. US2005/060069 and US2003/0070483. US2003/0070483 has its focus on a design/method that may enable cost-efficient production of an IMU, without any teaching regarding actual operation thereof. From US 2005/060069 there is known an arrangement in accordance with the pre-characterising portion of claim 1. However, this known arrangement presents the disadvantage of using a system design that may lack providing sufficient data handling capability/capacity, which may jeopardise the ability of providing sufficient processing and/or timely handling to fulfil desired needs.

SUMMARY OF THE INVENTION

It is an object of the invention to eliminate or at least minimize the above problem/- disadvantages, which is achieved by means of a control system for a vehicle in accordance with claim 1.

Thanks to the invention the inherent inaccuracy of a MEMS sensor, and especially a gyro meter, may be efficiently compensated for leading to the achievement of extremely cost effective high precision sensors having extremely small space requirements. As a consequence surprising synergies may be achieved when using such a MEMS sensors, especially including, a gyro meter in control systems for vehicles, since it facilitates cost efficient production of IMU's having high accuracy and which thanks to small space requirements may be installed in numerous different kinds of moving objects to provide improved functionality within a number of different areas, such as navigation, security etc. Especially the inclusion of such MEMS units, in combination with providing a high speed operation path, have shown to provide the potential to obtain significant synergetic achievements to improve internal safety for passengers within a vehicle. Here the use of the term passengers also includes the driver.

BRIEF DESCRIPTION OF THE DRAWINGS

In the following the invention will be described in relation to the enclosed figures, in which:

Fig. 1     schematically shows a car equipped with control system according to a preferred embodiment of the invention,
Fig. 2     shows a preferred layout of the principles for a central control system according to the invention with relation to input and output,
Fig. 3     shows a preferred schematic layout of a central control unit according to the invention,
Fig, 4.    shows a preferred schematic view of an inertia measurement unit according to the invention, and
Fig. 5     shows details of a digital signal processing unit in accordance with the invention,
Fig. 6     shows a preferred embodiment of a flexi-rigid card of a gyro sensor unit, and
Fig. 7     shows a preferred final product of a gyro sensor unit.

DETAILED DESCRIPTION

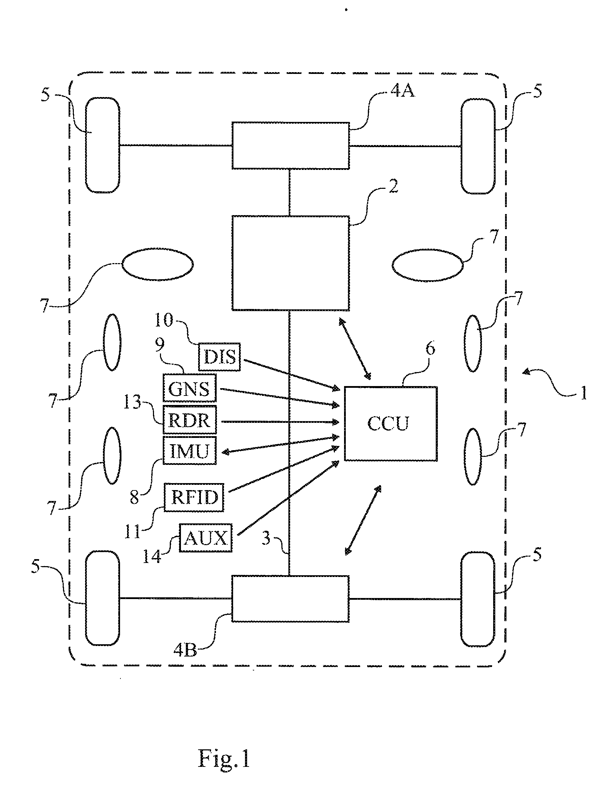

In Fig. 1 there is shown the principles for a preferred embodiment according to the invention, wherein a vehicle 1, in the form of a car, is equipped with some basic and some optional features. The car 1, has an engine 2 that provides the power to the wheels by means of a transmission 3. At each end of the transmission line 3 there are shown "black boxes" 4A, 4B intended to symbolise known equipment of a vehicle that may be used to individually control each one of the wheels 5. Accordingly this equipment 4A, 4B includes a number of subsystems such as breaking system including suitable sensors (e.g. for ABS, ESP, etc.) active suspensions, active differentials etc. Moreover the vehicle 1 is equipped with a number of other electronic subsystems for different purposes, e.g. the control of airbags 7. All of these electronic systems may be controlled by a central control unit 6 (CCU).

The central control unit 6 receives input data from a number of different sensors and measuring units. There is an inertia measurement unit 8, that provides three dimensional acceleration information and three dimensional displacement/rotational information (as will be described more in detail below). Further there is shown a global navigation system 9 (GNS), which preferably is in the form of a GPS (or DGPS), to provide accurate positioning information. There is also a driver information system 10 (DIS), that provides the central control unit 6 with information in relation to different parameters related to the driver behaviour and data in relation to the vehicle in itself. The vehicle 1 may also be equipped with a RFID unit 11, which by means of radio frequency identification may be provided with information from local transmittal units (not shown) arranged along a road. A radar unit 13 may also be provided to supply the central control unit 6 with information regarding objects in the near surrounding. Finally the vehicle 1 is also shown to be equipped with auxiliary sensors 14 that may provide any kind of information that may be useful to achieve optimized use of any of the sensors, e.g. temperature sensors, atmospheric pressure sensors, humidity sensors, etc.

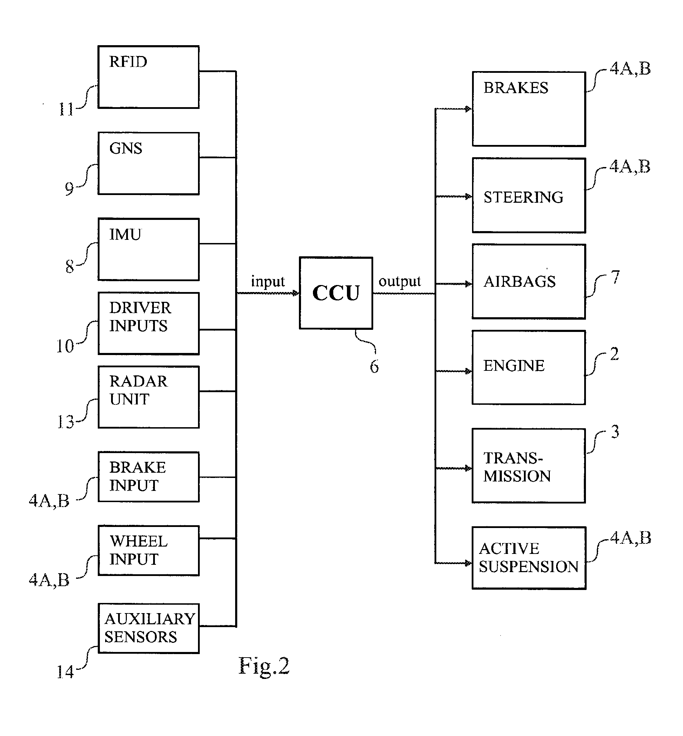

In Fig. 2 it is shown as a way of example which kind of input data that may be supplied to the central control unit 6 to provide for different output data in order to control electronic subsystems of the vehicle. Hence there is for instance driver input data 10, brake input data 4A, 4B and wheel input data 4A, 4B, which may be used by the central control unit 6 to actively control the breaks. In a similar manner the same input data and possible also radar sensors may be used to actively control the steering. The electronic system controlling the airbags 7 is preferably controlled by the central control unit 6 based upon input data from the inertia measurement unit 8, possible in combination with input data from the DIS 10 and/or radar sensors 13. In a similar manner the engine may be controlled by the central control unit 6 by the supply of input data from the different auxiliary sensors 14, DIS 10 and RFID 11. The transmission 3 and active suspension 4A, 4B may preferably be controlled by the central control unit 6 by means of input data from the inertia measurement unit 8 and also in relation to DIS 10. Hence, different sub systems of the vehicle may be flexibly controlled (by means of using appropriate software) to optimise handling in different situations, based on any chosen combination of different input data from the sensors, wherein the use of accurate data from the IMU provides surprising synergies.

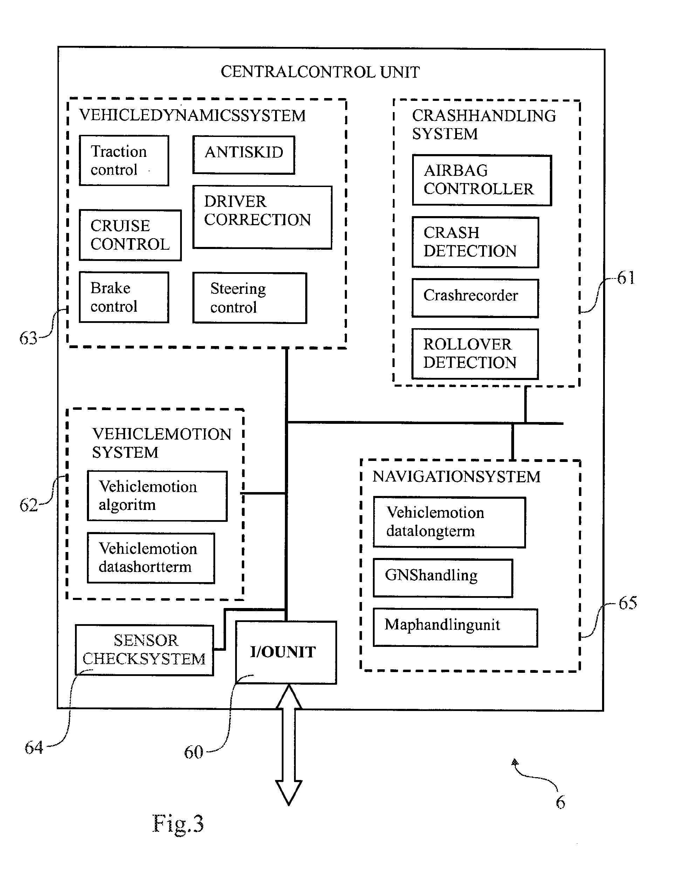

In Fig. 3 there is shown a schematic layout of central control unit 6 according to the invention. The central control unit 6 is equipped with necessary hardware (not shown), e.g. a processor device, an memory unit device, etc. Suitable software enables the central control unit 6 to provide desired functionality of a number of different electronic subsystems, based upon input data that is received by means of communication interface 60. There is a crash handling system (CHS) that controls the activation of the airbags 7. This system also includes and is governed by a crash detection system included within that subsystem. A crash detection system mainly uses input data from the inertia measurement unit 8 to identify that a crash has occurred, but may also use inputs from further sources such as accelerometers provided in the front part of the vehicle to achieve an earlier frontal crash detection. The CHS can control the activation of the airbags, by using the inputs from the IMU and other sensors, creating a tailored sequence for the activation of the airbags 7 and other safety measures. Thus each individual airbag 7 can be activated at an optimal moment in time. Moreover there is a crash recorder device within said CHS, which may record desired input data during a crash to enable analysis at a later stage of the cause and development of the crash, which may be useful to achieve safer design and/or programming. Moreover there is a roll over detection system, which may assist in deactivation of the airbag system to eliminate activation of the airbag in situations where activation would be undesired. There is also included a vehicle motion system (VMS), that is based upon a vehicle motion algorithm in combination with vehicle motion data in a shorter perspective.

The central control unit 6 also includes a vehicle dynamic system (VDS) that may be used to provide traction control, anti skid, cruise control, driver correction, brake control and steering control, by means of activation and deactivation in relation to appropriate input data from said arrangement of sensors, i.e. including the inertia measurement unit 8.

Finally Fig. 3 also shows that the central control unit 6 includes a navigation system that is based upon a combination of data from a global navigation system (GNS), vehicle motion data in a long term respective (i.e. pre-selected final goal), map handling unit and also in interactive communication with the vehicle motion system in case of failure of the GNS unit 9.

Accordingly Fig. 3 discloses a central control unit that may provide a driver of a vehicle 1 with an extremely accurate navigation system that also fulfils its function even if the GNS unit 9 would fall out, thanks to the combined use of an inertia measurement unit 8. The central control unit 6 also provides a multifunctional crash handling system that will provide an optimized control and activation/deactivation of the set of airbags 7 within the vehicle, to activate exactly the most appropriate set of airbags 7 depending on the input data for the specific situation that has been registered by the different set of sensors, thereby providing an optimal activation sequence. It is well known that inappropriate activation of airbags may be detrimental and accordingly this function of the control system 6 according to the invention may have drastic influence on reduction of injuries in connection with accidents. Thanks to the efficient inertia measurement unit 8, according to the invention, very accurate input data may be received to determine exactly what kind of crash protection measures are needed in each specific situation, e.g. leading to activation of an optimized set of airbags 7 to protect the passengers for exactly that kind of situation that momentarily is registered by the sensors, e.g. inertia measurement unit 8 and the radar unit 13 in advance determining how the vehicle will be crashing into surrounding objects. Furthermore during the crash handling system may use other measures as for example braking and traction control by cooperation with the vehicle dynamic system. Moreover, the central control unit 6 with its arrangement of sensors may also through the advanced vehicle dynamic system assist each driver individually, helping the driver to control the vehicle in a safe manner and prevent the driver from hazardous performances.

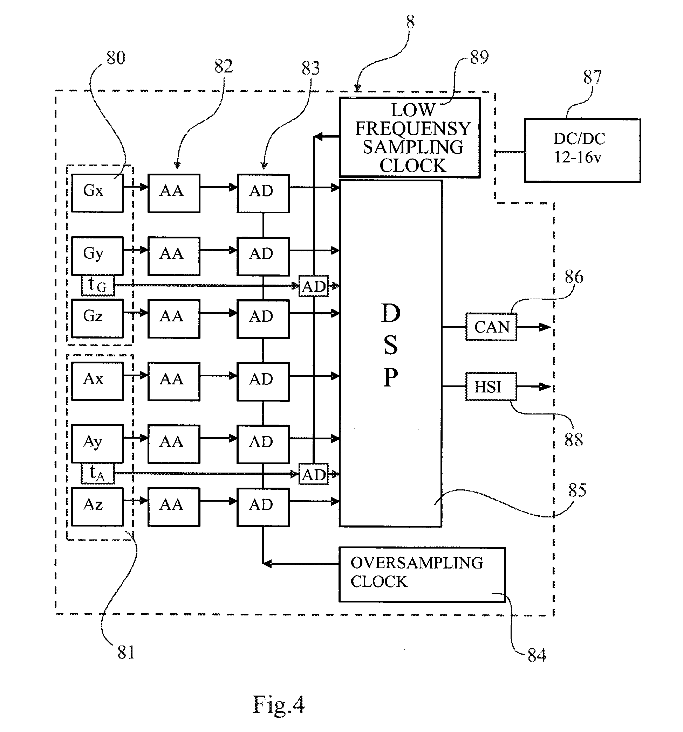

In Fig. 4 there is shown a schematic view of an inertia measurement unit 8 in accordance with the invention. There is shown a three axis MEMS gyro-meter 80 and a three axis MEMS accelerometer 81. Thanks to measuring along three axis each deviation in any direction will be sensed and produce a signal, by means of an anti aliasing filter 82. These signals will be converted in an AD-converter 83. The AD-converters are sampled by an over sampling clock 84, the frequency of which is in the range 4-20 kHz. Further, there are temperature sensors $t_G$ and $t_A$, wherein the temperature sensor $t_G$ senses the temperature for all the gyro sensors Gx, Gy, Gz and $t_A$ in a corresponding manner for the accelerometer sensors Ax, Ay, Az. The temperature sensors $t_A$ and $t_{G,}$, respectively, producing signals that via respective AD converters supply digital temperature signals, which AD converters are sampled by another sampling clock 89 having a much lower frequency, e.g. 1-10 Hz. The digitalised signals are supplied to a digital signal processor 85 (DSP). After treatment by the DSP 85 the signals are transmitted by a CAN bus 86 and/or a high speed interface 88. For normal purposes the CAN bus 86 is used, but in some situations it is advantageous if information can be transmitted more rapidly, for instance in a vehicle crash situation. The high speed interface 88 is implemented for that reason and provides a fast interface and where only the most necessary information is sent. The CAN bus normally operates at an frequency of 200-600 Hz whereas the high speed interface 88 operates at a frequency above 600 Hz, normally of 1-10 kHz. The IMU is powered by a DC/DC unit 87.

The three axis MEMS gyro 80 should preferably have a high bias stability. It is preferred that the bias is less than 100°/hour, in order to achieve good accuracy. Furthermore it is important to calibrate the bias as often as possible in order to maintain good accuracy. It has been found that this may easily be achieved when used in vehicles since conventional vehicles rather frequently come to a total stop, providing a perfect situation for calibration. When a vehicle has stopped, i.e. does not move in relation to the earth, it is an axiom that the signals from the accelerometer shall measure earth-g as well as from the gyro meter should measure zero (earth rotation), since no changes take place of the vehicles position relative the ground. Inclinometers (pitch and yaw) can be used to assist calibration of accelerometers. Accordingly this basic fact facilitates a simple and efficient means for frequent calibration of the bias of both the MEMS gyro as well as the MEMS accelerometer, providing a beneficial self test check. This repetitive calibration, which is a kind of continuous quality check facility (that its given for free), provides an enormous advantage to facilitate cost effective and accurate use of MEMS elements.

Furthermore tests have shown that bias and bias stability is not sufficient parameters to keep in control to achieve high accuracy. Instead diligent testing have shown that many of the parameters of the MEMS units have to be compensated for depending on environmental influence. For instance bias and scale factor have shown to vary in different ways in relation to temperature. Nonlinearity need to be compensated for due to poor MEMS linearity. Also the bandwidth is of great importance. By individual testing and registration of influence of environmental parameters, such as temperature, and appropriate compensation by means of the digital signal processor (DSP), preferably in the form of appropriate algorithms, may form the bases to achieve an IMU having extremely good accuracy and an IMU unit according to the invention can easily achieve 0,01°/sec. Preferably a CAN bus and/or high speed interface 88 is used as the interface with the central control unit 6. A CAN bus operating at about 200-600 Hz is standard within the automobile sector, but higher speed, e.g. by a separate high speed interface 88 is needed for efficient crash handling.

According to the invention each sensor Gx, Gy, Gz, Ax, Ay, Az preferably has its own temperature sensor transmitting a (e.g. Gx) signal $t_{Gx,}$ corresponding to the actual temperature at the position of the sensor Gx. The compensation for temperature deviation of each sensor is performed by the DSP prior to integration whereby an expedient processing is achieved, since it may be performed without being dependant on any sampling periodicity (as is the case if integration is performed according to known methods). A preferred algorithm to be used for the compensation of temperature influence is:

$$k_n(t_{Gx} - T)^n + + k_2(t_{Gx} - T)^2 + k_1(t_{Gx} - T) + k_T$$

where T is the temperature at which the sensor has been calibrated and accordingly $k_T$ is the compensation factor (normally merely bias and scale factor) at that temperature. Normally using n = 3 is sufficient to obtain a desired accuracy, but even higher degree of accuracy (e.g. n = 5) is no problem since the system according to the invention is designed to enable high processing capability, e.g. by the use of a DSP using floating point arithmetic principles.

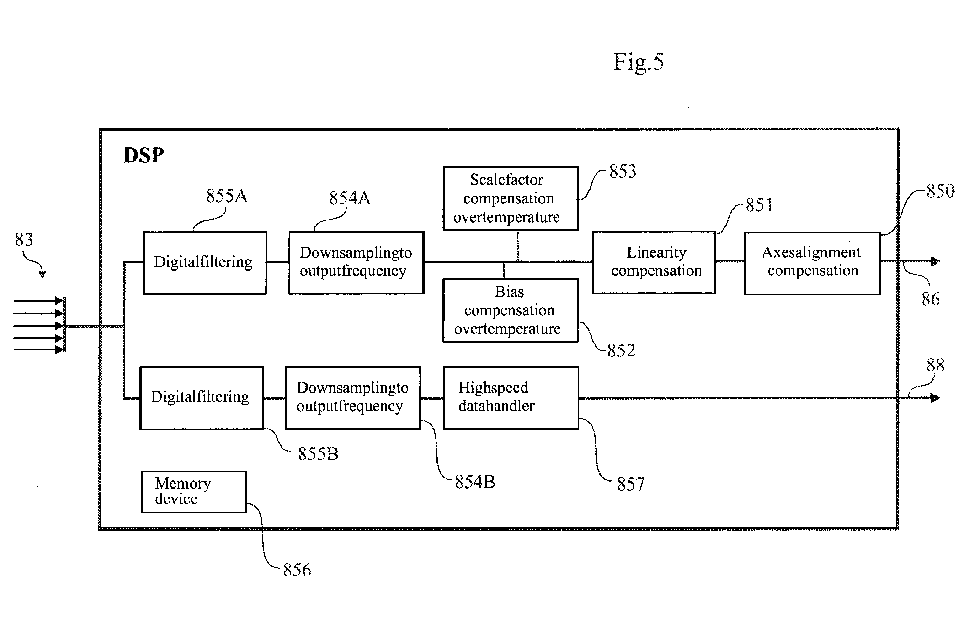

In Fig. 5 there is shown a schematic view of a digital signal processor 85 (DSP) according to the invention. It is shown that input signals 83 are provided from the AD-converters. Furthermore it is shown a memory device 856, wherein calibrated data are stored, i.e. compensation factors and compensation algorithms that were obtained during initial calibration (the calibration performed before acceptance test) of each one of the sensors Gx, Gy, Gz, Ax, Ay and Az respectively a memory device 856. Thereafter different compensations of the received digital signals will be achieved by means of the digital signal processor 85.

There are provided two paths for the signals one high speed path where the signal processing are kept at a minimum and a normal operation path. The high speed path is used to transmit the minimum amount of information from the gyros and accelerometers that is needed using minimum needed signal processing in order to transmit it to a receiving unit with as little delay as possible, e.g. in a crash situation it is an advantage if the delay from the moment of an impact to the moment when the crash handling system 61 (see Fig. 3) receives the data from the IMU can be kept as low as possible. This can be done by reducing the signal processing in the DSP 85, since the signals in a crash are comparably distinct and since a crash takes place within a short time period it is not necessary to compensate the signals as much as in the long run. Furthermore it is possible to provide only the most important data, e.g. depending of the actual embodiment one can choose to only transmit accelerometer data through the high speed path. Firstly there is a digital filtering 855B that eliminates irrelevant portions (noise) of the received signals. It is possible to use different type digital filtering for the normal IMU operation and/or crash handling operation (the high speed path). The filter output is then sampled down to output frequency 854B. The output frequency for the high speed path and the normal operation path may differ. Thereafter a high speed data handler 857 transmits suitable data to the high speed interface 88.

In the normal operation path there is firstly a digital filtering 855A that eliminates irrelevant portions (noise) of the received signals. The filter output is then sampled down to output frequency 854A. The down sampled data is first compensated for bias over temperature and scale factor over temperature 852, 853. Secondly there is a linearity compensation 851, that compensates for sensors signals not been totally linear. Thirdly there is an axis alignment compensation 850, which will compensate for possible deviation in relation to misalignment.

As is evident the different compensations will be achieved by means of using pre-stored data, in memory device 856, and input signals 83, for each one of the sensor units being used and which form the bases for performing said compensations. The different compensations are performed by use of appropriate algorithms that are processed within the digital signal processor 85.

The crash handling output may be less compensated, e.g. omitting compensation for non-linearity and misalignment, and outputted with a higher frequency at the high speed interface compared to the normal IMU output. Further, it is possible to compensate data in the high speed path 88 by using syncron samples from the normal operation path 86, e.g. every 10:th sample of the high speed path if the high speed operates at 1000 Hz and the normal path at 100 Hz. Of course if the signal processing is fast enough, i.e. at least above 600 Hz, it may not be necessary to provide a separate high speed path.

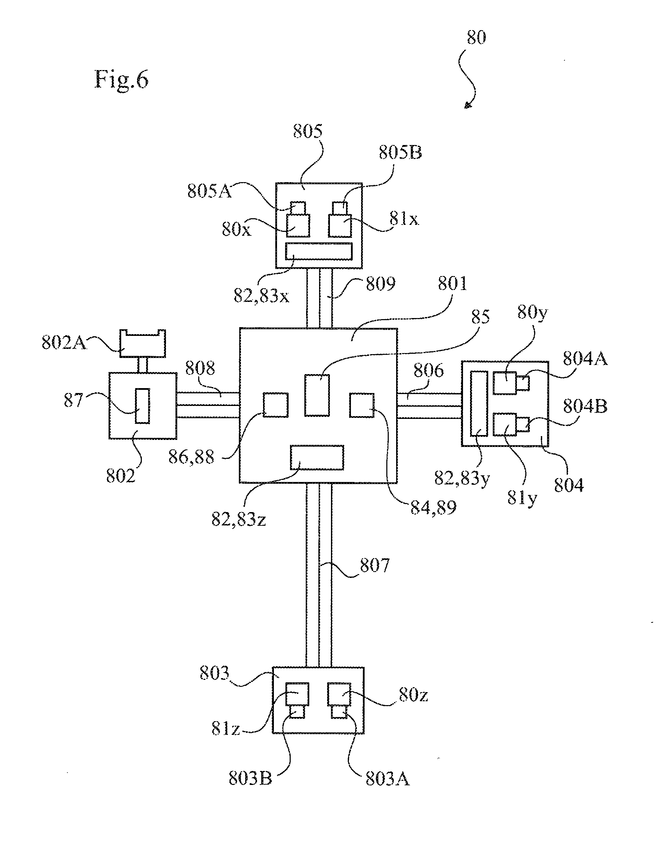

In Fig. 6 there is shown a preferred form of an IMU sensor arrangement of the invention, comprising a gyro sensor 80 and an accelerometer arrangement 81. The arrangement is called a flexi-rigid card, comprising a semi rigid body 801-809 including circuitry, onto which needed elements are affixed. There is a central rectangular portion 801 provided with the DSP 85 and aliasing filter 82, AD converter 83 and sampling clock/s 84, 89. Perpendicularly at each side of the central portion there protrude flexible leg portions 806-809. A first leg 808 carries a body portion 802 at its end comprising the DC/DC 87, and a contact 802A for connection of the IMU unit 80 to the control system 6. The second 806, third 807, and fourth 809 legs each carry a body portion 803-805 having a gyro sensor $80_X$, $80_Y$, $80_Z$ and an accelerometer sensor $81_X$, $81_Y$, $81_Z$, respectively attached thereon, and also two temperature sensors 805A, 805B; 804A, 804B; 803A, 803B each (one centrally positioned temperature sensor, as indicated in Fig. 4, may suffice in some applications). Hence the flexi-card arrangement is fully equipped to provide the DSP 85 with digitalised signals for treatment, e.g. filtering, compensation for temperature, etc., to supply the control unit 6 with accurate digital information. To present that there are different options for the positioning of some parts Fig. 6 shows that there is one AA-filter 82 and AD converter 83 at each one of the body portions 804, 805 for the X- and Y-sensors, whereas those parts 82, $83_Z$ for the Z-sensors $80_Z$, $81_Z$ are positioned on the central portion 801. Hence, the positioning on the card of some parts has no influence on function and may therefore be chosen based on practical reasons, e.g. space requirement and/or production aspects.

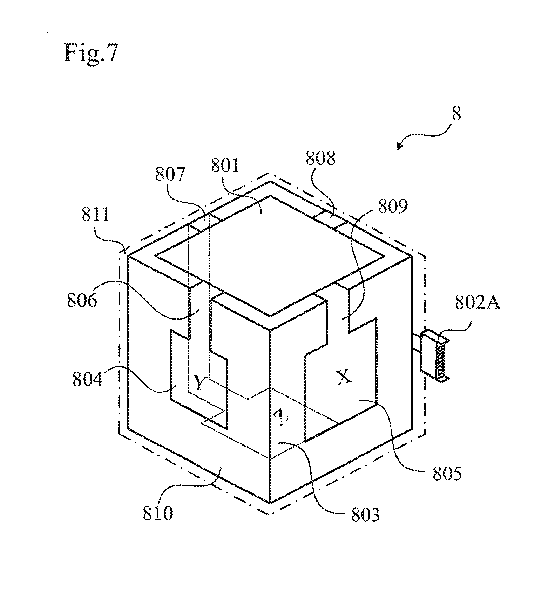

Thanks to the use of a flexi-rigid card all sensors 80 $_{X, Y, Z}$, 81 $_{X, Y, Z}$ can be initially calibrated for bias and scale factor, possibly also linearity, at the same time since in the shown flat-pack form they are all extending in one and the same plane. Hence, by means of a turnable device (rotating in the horizontal plane, allowing rotation tests and tumble tests) calibration constants k may easily be established e.g. compensation factors for bias and scale factor, and possibly also linearity, at different temperatures, which are stored in a memory device 856 within the DSP to be used for the above compensation within the system, providing high accuracy. After calibration has been finalised, for chosen parameters/factors the flexi-rigid card 80 is shaped to the intended configuration (see Fig. 7) for further calibration of axes alignment compensation, and possibly also linearity. Thereafter the unit is ready for use.

For linearity preferably the following polynom is used:

$$k_n \cdot (sensor\_data)^n + ..... + k_2 \cdot (sensor\_data)^2 + k_1 \cdot sensor\_data + k_0$$

In Fig. 7 there is shown a preferred physical embodiment of an IMU-unit 8 according to the invention, when the flexi-rigid card, of Fig. 6 (without showing all details), has been wrapped around/fixed to a rectangular parallelepiped, preferably a cube 810. The cube may be made in many different materials but some polymer, e.g. thermo plastic (e.g. PA, PP), that fulfils basic needs (durability, dimension stable, etc.) and can be produced to low cost (e.g. injection moulding) may beneficially be used. As shown the different body portions 803, 804, 805 have been attached parallel to one side each of the cube 810, by bending each respective leg portion 806, 807 and 809. Notably the leg portion 807 for the Z-sensors 80$_Z$, 81$_Z$ is more than twice the length of the other legs 806, 809 (carrying the X-body portion 805 and Y-body portion respectively) to reach around one side and allow positioning of that body portion 803 at the bottom of the cube 810. Hence all body portions 803, 804, 805 carrying calibrated accelerometer 81 and gyro meter 80 sensors are positioned exactly perpendicularly in relation to each outer, enabling accurate sensing in all directions. Moreover Fig. 7 indicates that the unit 801-805, 810 preferably is sealed/protected by an other protecting cover 811, e.g. a resin or wax or plastic etc., merely enabling the contact 802A to protrude. To achieve good accuracy the cube should not be too small, preferably at least having 15 mm sides and more preferred in the range 20-50 mm.

The invention is not limited by the above described embodiment, but may be varied within the scope of the dependent claims. For instance, it is evident for the skilled person that different kind of MEMS units may require different sets of compensation and that indeed some of the shown compensations may be dispensed with without scarifying to much of accuracy. Further, it is evident that in some installations one temperature sensor for all sensors 80, 81 may suffice, e.g. if the body 110 has sufficiently high heat conductivity and the covering lager 111 has low heat conductivity.

**Claims**

1. A control system for a vehicle comprising a central control unit (6) and a sensor arrangement (4A, 4B, 8, 9, 10, 11, 13) arranged within the vehicle (1) to allow varying temperature of the sensor arrangement, said sensor arrangement comprising an inertia measurement unit (8) equipped with MEMS accelerometer (81) and MEMS gyro meter (80) producing signals (82, 83), wherein said Inertia Measurement Unit (8) is arranged to provide said central control unit (6) with digitalised information related to the behaviour of said vehicle (1) by means of a digital signal processor (85) to enable activation and/or deactivation of at least one electronic system (61, 62, 63, 64, 65) of said vehicle (1), said digital signal processor (85), having pre-stored data treatment capability (850, 851, 852, 853, 854, 855, 856, 857) relating to each one of the sensors (80, 81) in said Inertia Measurement Unit (8) and a data input receiving device, arranged to compensate said digitalised information prior to integration thereby transmitting compensated accurate digitalised information to said central control unit (6), **characterised in that** said digital signal processor comprises a normal outgoing operation path (86) and a high speed outgoing operation path (88), said high speed outgoing operation path (88) operating at above 600 Hz, preferably in the range 1-10 kHz.

2. A control system according to claim **1, characterised in that** said Inertia Measurement Unit (8) is centrally positioned in said vehicle.

3. A control system according to claim 1 or 2, **characterised in that** said data input receiving device includes a memory device (856) that stores selected input data, which preferably is continuously updated.

4. A control system according to claim 3, **characterised in that** said selected input data includes any or all of: 1) temperature, 2) humidity, 3) atmospheric pressure.

**5.** A control system according to claim 4, **characterised in that** said DSP having pre-stored data in said memory device (856) for compensation of bias and/or scale factor over temperature, for the sensors (80, 81) in said Inertia Measurement Unit (8).

**6.** A control system according to any preceding claim, **characterised in that** said MEMS gyro meter (80) has a bias stability less than 100 deg/h.

**7.** A control system according to any preceding claim, **characterised in** being arranged to transmit less information from said Inertia Measurement Unit (8) to the central unit (6) during crash handling.

**8.** A control system according to claim 1, **characterised in that** the high speed operation path (88) uses less signal processing than the normal operation path.

**9.** A control system according to any preceding claim, **characterised in that** said central control unit (6) is adapted to control the activation of at least one airbag (7), preferably said central control unit is adapted to control the activation of a set of airbags (7) to control activation of an optimal set of airbags in a tailored activation sequence using, to at least some extent, said digitalised information from said Inertia Measurement Unit (8).

**10.** A control system according to any preceding claim, **characterised in that** said electronic system relates to a navigation system (65) arranged to supply the driver with the accurate information concerning navigation of the vehicle, wherein preferably said central control unit (6) receives input data from a GNS unit (9), preferably GPS, and wherein input data from the Inertia Measurement Unit (8) is used upon loss of input data from the GNS unit (9).

**11.** A control system according to any preceding claim, **characterised in that** said electronic system relates to a dynamic vehicle handling system (63), wherein input data from said Inertia Measurement Unit (8) is used to achieve safe handling of the vehicle.

**12.** A control system according to any preceding claim, **characterised in that** said MEMS gyro meter (80) is in the form of a flex-rigid card (801-809).

**13.** A control system according to claim 14, **characterised in that** said MEMS accelerometer (81) is also arranged on said flexi-rigid card (801-809) and preferably that there is one temperature sensor (803-805A, 803-805B) for each one of the sensors ($80_X$, $80_Y$, $80_Z$, $81_X$, $81_Y$, $81_Z$).

**14.** A control system according to claim 12, **characterised in that** said flexi-rigid card is arranged fixedly around an rectangular parallelepipedous body (810).

**Patentansprüche**

**1.** Steuersystem für ein Fahrzeug, umfassend eine zentrale Steuereinheit (6) und eine Sensoranordnung (4A, 4B, 8, 9, 10, 11, 13), die in dem Fahrzeug (1) angeordnet ist, um ein Variieren der Temperatur der Sensoranordnung zu gestatten, wobei die Sensoranordnung eine Trägheitsmesseinheit (8) umfasst, die mit einem MEMS-Beschleunigungsmesser (81) und einem MEMS-Gyrometer (80) ausgerüstet ist, welche Signale (82, 83) erzeugen, wobei die Trägheitsmesseinheit (8) dazu eingerichtet ist, die zentrale Steuereinheit (6) mit digitalisierten Informationen bezüglich des Verhaltens des Fahrzeugs (1) zu versorgen mittels eines digitalen Signalprozessors (85), um eine Aktivierung und/oder Deaktivierung von mindestens einem elektronischen System (61, 62, 63, 64, 65) des Fahrzeugs (1) zu ermöglichen, wobei der digitale Signalprozessor (85) vorgespeicherte Datenbearbeitungsmöglichkeiten (850, 851, 852, 853, 854, 855, 856, 857) in Bezug auf jeden der Sensoren (80, 81) in der Trägheitsmesseinheit (8) aufweist und eine Dateneingabeempfangsvorrichtung, die eingerichtet ist, die digitalisierten Informationen vor der Integration zu kompensieren und damit kompensierte akkurate digitalisierte Informationen an die zentrale Steuereinheit (6) zu senden, **dadurch gekennzeichnet, dass** der digitale Signalprozessor einen Normalbetriebs-Ausgangspfad (86) und einen Hochgeschwindigkeitsbetriebs-Ausgangspfad (88) umfasst, wobei der Hochgeschwindigkeitsbetriebs-Ausgangspfad (88) bei über 600 Hz, vorzugsweise im Bereich von 1-10 kHz arbeitet.

**2.** Steuersystem nach Anspruch 1, **dadurch gekennzeichnet, dass** die Trägheitsmesseinheit (8) zentral in dem Fahrzeug angeordnet ist.

3. Steuersystem nach Anspruch 1 oder 2, **dadurch gekennzeichnet, dass** die Dateneingabeempfangseinrichtung eine Speichervorrichtung (856) aufweist, die ausgewählte Eingabedaten speichert, welche vorzugsweise kontinuierlich aktualisiert werden.

4. Steuersystem nach Anspruch 3, **dadurch gekennzeichnet, dass** die ausgewählten Eingabedaten irgendwelche oder alle der folgenden umfassen: 1) Temperatur, 2) Feuchtigkeit, 3) Luftdruck.

5. Steuersystem nach Anspruch 4, **dadurch gekennzeichnet, dass** der DSP vorgespeicherte Daten in der Speichervorrichtung (856) zur Kompensation eines Bias und/oder eines Skalenfaktors über die Temperatur aufweist, für die Sensoren (80, 81) in der Trägheitsmesseinheit (8).

6. Steuersystem nach einem der vorhergehenden Ansprüche, **dadurch gekennzeichnet, dass** das MEMS-Gyrometer (80) eine Bias-Stabilität von unter 100 Grad/h aufweist.

7. Steuersystem nach einem der vorhergehenden Ansprüche, **dadurch gekennzeichnet, dass** es eingerichtet ist, weniger Informationen von der Trägheitsmesseinheit (8) zu der Zentraleinheit (6) während einer Unfallverarbeitung zu übertragen.

8. Steuersystem nach Anspruch 1, **dadurch gekennzeichnet, dass** der Hochgeschwindigkeitsbetriebspfad (88) weniger Signalverarbeitung nutzt als der Normalbetriebspfad.

9. Steuersystem nach einem der vorhergehenden Ansprüche, **dadurch gekennzeichnet, dass** die zentrale Steuereinheit (6) dazu angepasst ist, die Aktivierung von mindestens einem Airbag (7) zu steuern, vorzugsweise die zentrale Steuereinheit angepasst ist, die Aktivierung eines Satzes von Airbags (7) zu steuern, um eine Aktivierung eines optimalen Satzes von Airbags in einer maßgeschneiderten Aktivierungssequenz zu steuern, unter Verwendung, zumindest teilweise, der digitalisierten Informationen von der Trägheitsmesseinheit (8).

10. Steuersystem nach einem der vorhergehenden Ansprüche, **dadurch gekennzeichnet, dass** das elektronische System mit einem Navigationssystem (65) verknüpft ist, das eingerichtet ist, den Fahrer mit den akkuraten Informationen in Bezug auf die Navigation des Fahrzeugs zu versorgen, wobei vorzugsweise die zentrale Steuereinheit (6) Eingabedaten von einer GNS-Einheit (9), vorzugsweise einem GPS, empfängt, und wobei Eingabedaten von der Trägheitsmesseinheit (8) nach einem Verlust von Eingabedaten von der GNS-Einheit (9) verwendet werden.

11. Steuersystem nach einem der vorhergehenden Ansprüche, **dadurch gekennzeichnet, dass** das elektronische System mit einem dynamischen Fahrzeugbedienungssystem (63) verknüpft ist, wobei Eingabedaten von der Trägheitsmesseinheit (8) verwendet werden, um eine sichere Bedienung des Fahrzeugs zu erreichen.

12. Steuersystem nach einem der vorhergehenden Ansprüche, **dadurch gekennzeichnet, dass** das MEMS-Gyrometer (80) in der Form einer Starrflex-Karte (801-809) vorliegt.

13. Steuersystem nach Anspruch 14, **dadurch gekennzeichnet, dass** der MEMS-Beschleunigungsmesser (81) ebenfalls auf der Starrflex-Karte (801-809) angeordnet ist und dass vorzugsweise für jeden der Sensoren ($80_X$, $80_Y$, $80_Z$, $81_X$, $81_Y$, $81_Z$) ein Temperatursensor (803-805A, 803-805B) vorliegt.

14. Steuersystem nach Anspruch 12, **dadurch gekennzeichnet, dass** die Starrflex-Karte fest um einen rechteckigen Parallelepiped-Körper (810) herum angeordnet ist.

**Revendications**

1. Système de commande pour un véhicule comprenant une unité de commande centrale (6) et un agencement de capteurs (4A, 4B, 8, 9, 10, 11, 13) disposé à l'intérieur du véhicule (1) de manière à permettre à la température de l'agencement de capteurs de varier, ledit agencement de capteurs comprenant une unité de mesure d'inertie (8) équipée d'un accéléromètre MEMS (81) et d'un gyromètre MEMS (80) produisant des signaux (82, 83), ladite unité de mesure d'inertie (8) étant agencée pour fournir à ladite unité de commande centrale (6) des informations numérisées liées au comportement dudit véhicule (1) au moyen d'un processeur de signal numérique (85) pour permettre l'activation et / ou la désactivation d'au moins un système électronique (61, 62, 63, 64, 65) dudit véhicule (1), ledit processeur de signal numérique (85), ayant une capacité de traitement de données pré- mémorisées (850, 851, 852, 853, 854, 855, 856, 857) relative à chacun des capteurs (80, 81) dans ladite unité de mesure d'inertie (8) et un dispositif de réception de données d'entrée, agencé pour compenser lesdites informations numérisées avant l'intégration, transmettant de ce fait des informations numérisées compensées et précises à ladite unité de commande centrale (6),

**caractérisé en ce que** ledit processeur de signal numérique comprend une voie normale de fonctionnement de sortie (86) et une voie de fonctionnement de sortie grande vitesse (88), ladite voie de fonctionnement de sortie à grande vitesse (88) fonctionnant au dessus de 600 Hz, de préférence dans la gamme allant de 1 à 10 kHz.

2. Système de commande selon la revendication 1, **caractérisé en ce que** ladite unité de mesure d'inertie (8) est positionnée centralement dans ledit véhicule.

3. Système de commande selon la revendication 1 ou la revendication 2, **caractérisé en ce que** ledit dispositif d'entrée de données de réception comprend un dispositif à mémoire (856) qui stocke des données d'entrée sélectionnées, lequel, de préférence, est continuellement mis à jour.

4. Système de commande selon la revendication 3, **caractérisé en ce que** lesdites données d'entrée sélectionnées comprennent tout ou partie de : 1) la température, 2) l'humidité, 3) la pression atmosphérique.

5. Système de commande selon la revendication 4, **caractérisé en ce que** ledit DSP comprenant des données pré-mémorisées dans ledit dispositif à mémoire (856) pour la compensation de la polarisation et / ou du facteur d'échelle selon la température, pour les capteurs (80, 81) dans ladite unité de mesure d'inertie (8).

6. Système de commande selon l'une quelconque des revendications précédentes, **caractérisé en ce que** ledit gyromètre MEMS (80) a une stabilité de polarisation inférieure à 100 deg./h.

7. Système de commande selon l'une quelconque des revendications précédentes, **caractérisé en ce qu'**il est agencé pour transmettre moins d'informations depuis ladite unité de mesure d'inertie (8) vers l'unité centrale (6) au cours de la prise en charge d'un crash.

8. Système de commande selon la revendication 1, **caractérisé en ce que** la voie de fonctionnement à haute vitesse (88) utilise moins de traitement de signal que la voie de fonctionnement normale.

9. Système de commande selon l'une quelconque des revendications précédentes, **caractérisé en ce que** ladite unité de commande centrale (6) est adaptée pour commander l'activation d'au moins un airbag (7), de préférence ladite unité de commande centrale est adaptée pour commander l'activation d'un ensemble d'airbags (7) afin de commander l'activation d'un ensemble optimal d'airbags dans une séquence d'activation adaptée en utilisant, dans au moins une certaine mesure, lesdites informations numérisées provenant de ladite unité de mesure d'inertie (8).

10. Système de commande selon l'une quelconque des revendications précédentes, **caractérisé en ce que** ledit système électronique se rapporte à un système de navigation (65) agencé pour fournir au conducteur des informations précises concernant la navigation du véhicule, lequel de préférence ladite unité de commande centrale (6) reçoit des données d'entrée d'une unité de GNS (9), de préférence un GPS, et dans lequel les données d'entrée provenant de l'unité de mesure d'inertie (8) sont utilisées en cas de perte de données d'entrée provenant de l'unité de GNS (9).

11. Système de commande selon l'une quelconque des revendications précédentes, **caractérisé en ce que** ledit système électronique se rapporte à un système dynamique de conduite du véhicule (63), dans lequel les données d'entrée à partir de ladite unité de mesure d'inertie (8) sont utilisées pour réaliser la conduite du véhicule en toute sécurité.

12. Système de commande selon l'une quelconque des revendications précédentes, **caractérisé en ce que** ledit gyromètre MEMS (80) est sous la forme d'une carte flexi-rigide (801 à 809).

13. Système de commande selon la revendication 14, **caractérisé en ce que** ledit accéléromètre MEMS (81) est également disposé sur ladite carte flexi-rigide (801 à 809) et **en ce qu'**il y a de préférence une sonde de température (803-805A, 803-805B) pour chacun des capteurs (80x, 80y, 80z, 81x, 81y, 81z).

14. Système de commande selon la revendication 12, **caractérisé en ce que** ladite carte flexi-rigide est disposée de manière fixe autour d'un corps parallélépipédique rectangulaire (810).

Fig.1

Fig.2

CENTRALCONTROL UNIT

VEHICLEDYNAMICSSYSTEM

Traction control

ANTISKID

CRUISE CONTROL

DRIVER CORRECTION

Brake control

Steering control

63

CRASHHANDLING SYSTEM

AIRBAG CONTROLLER

CRASH DETECTION

Crashrecorder

ROLLOVER DETECTION

61

VEHICLEMOTION SYSTEM

Vehiclemotion algoritm

Vehiclemotion datashortterm

62

NAVIGATIONSYSTEM

Vehiclemotion datalongterm

GNShandling

Maphandlingunit

65

SENSOR CHECKSYSTEM

I/OUNIT

64

60

6

Fig.3

Fig.4

Fig.5

Fig.6

Fig.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005060069 A
- US 20030070483 A